Europäisches Patentamt

European Patent Office

Office européen des brevets

(11) Publication number: **0 183 127**
**A1**

# (12) EUROPEAN PATENT APPLICATION

(21) Application number: **85114359.4**

(22) Date of filing: **12.11.85**

(51) Int. Cl.⁴: **G 21 C 17/06**

(30) Priority: **19.11.84 SE 8405790**

(43) Date of publication of application:
**04.06.86 Bulletin 86/23**

(84) Designated Contracting States:
**BE CH DE LI**

(71) Applicant: **AB ASEA-ATOM**

**S-721 83 Västeras(SE)**

(72) Inventor: **Collin, Per**
**Stafettgatan 34**
**S-722 41 Västeras(SE)**

(72) Inventor: **Olsson, Torsten**
**Bernsborgsstigen 11**
**S-722 18 Västeras(SE)**

(74) Representative: **Boecker, Joachim, Dr.-Ing.**
**Rathenauplatz 2-8**
**D-6000 Frankfurt a.M. 1(DE)**

(54) Repair and inspection arrangement for fuel assemblies belonging to a pressurized water reactor.

(57) Repair and inspection arrangement for fuel assemblies belonging to a pressurized water reactor comprising a scaffold vertically arranged in a water pool. The scaffold has a vertical guide (13) for a repair car (14) and a vertical guide (11) for a coordinate table car with a tool holder. The repair car (14) has an elongated container (19) for accommodating a fuel assembly. The container (19) is provided at both ends with a lid (21) which is fixable and removable from above, and is fixed at its mid-portion to a horizontal shaft (25) which is turnably journalled on the repair car (14). This enables the container (19) to be turned within a range of at least 180° by means of an operating device which is connected to the shaft (25) and operable from above.

EP 0 183 127 A1

./...

FIG. 1A

AB ASEA-ATOM
S-721 83 Västeras/Sweden

Repair and inspection arrangement for fuel assemblies
belonging to a pressurized water reactor

The invention relates to a repair and inspection arrangement
for fuel assemblies belonging to a pressurized water reactor
according to the precharacterising part of claim 1.

Certain fuel assemblies for pressurized water reactors are
constructed in such a way that for dismantling them, it is
necessary to loosen mechanical connections at their
downwardly-facing end surface. For this reason it has
hitherto been necessary to turn the entire assembly around
before placing it in a repair and inspection device of the
above-mentioned kind.

In addition to the above-mentioned device, it has hitherto
been necessary to arrange a special turning device for the
service pool, which envolves certain drawbacks, for example,
obstruction of the available space.

The invention aims at a repair and inspection arrangement
for fuel assemblies belonging to a pressurized water reactor
of the above-mentioned kind which renders the above-mentioned turning device obsolete.

To achieve this aim the invention suggests a repair and inspection arrangement for fuel assemblies according to the
introductory part of claim 1, which is characterized by the
features of the characterizing part of claim 1.

November 9, 1985
21 666 PE
0183127

A further development of the invention is characterized by the features of the additional claim.

Besides allowing to dispense with the above-mentioned turning device, the invention offers the further advantage that the arrangement can be used, with very simple additional equipment, to perform a so-called "elevate sipping". This is a leak detection method in which the fuel assembly is moved repeatedly between a bottom position and a position near the surface level of the pool water.

The invention will now be described in greater detail with reference to the accompanying drawings showing - by way of example - in

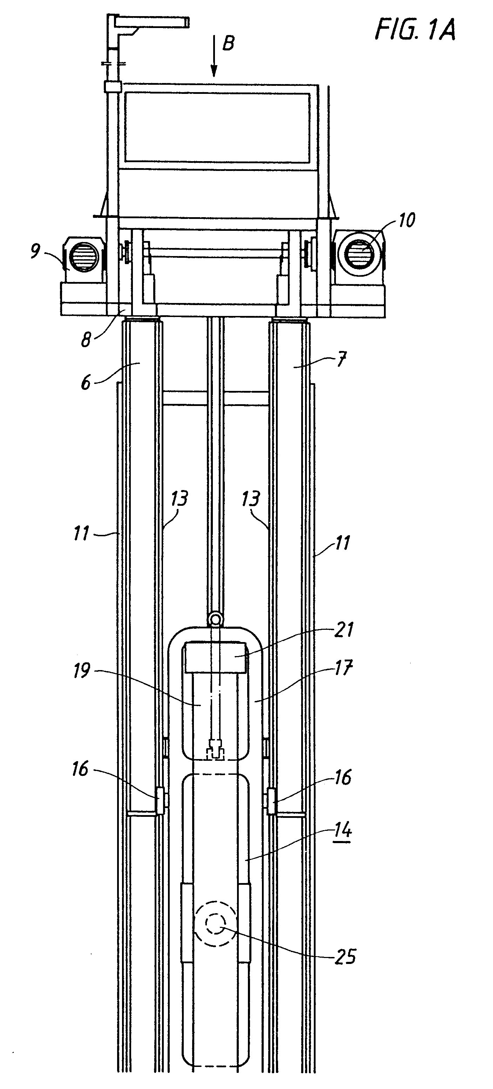

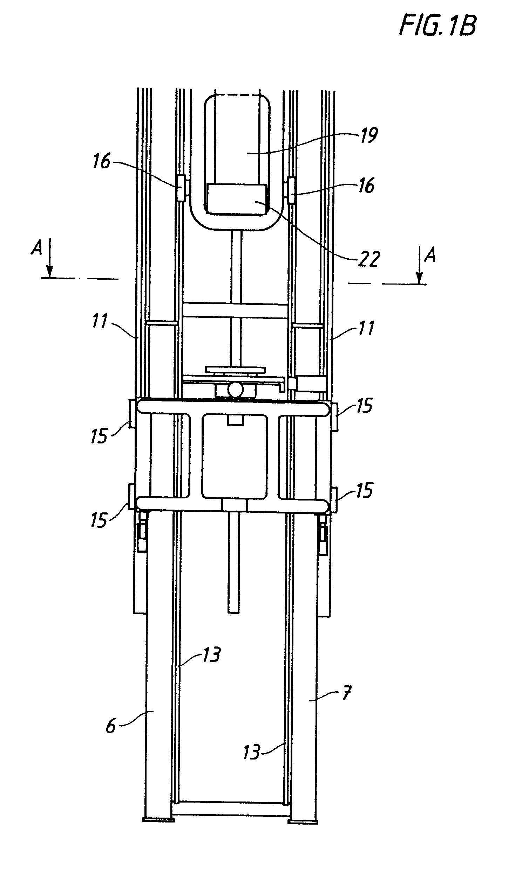

Figure 1A and 1B the upper and the lower half, respectively, of an arrangement according to the invention in a view towards the front side, i.e. in a view perpendicular to the pool wall on which the arrangement is positioned,

Figure 2A and 2B the upper and lower halves, respectively, of the same arrangement in a side view,

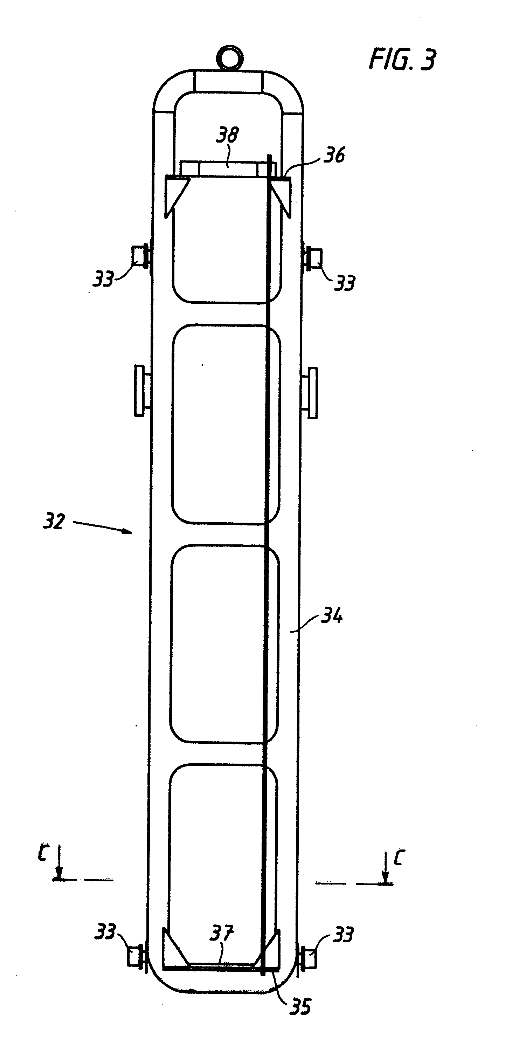

Figure 3 in a view perpendicular to the above-mentioned pool wall an inspection car or carriage which can be easily mounted in the device instead of the repair car shown in Figure 1,

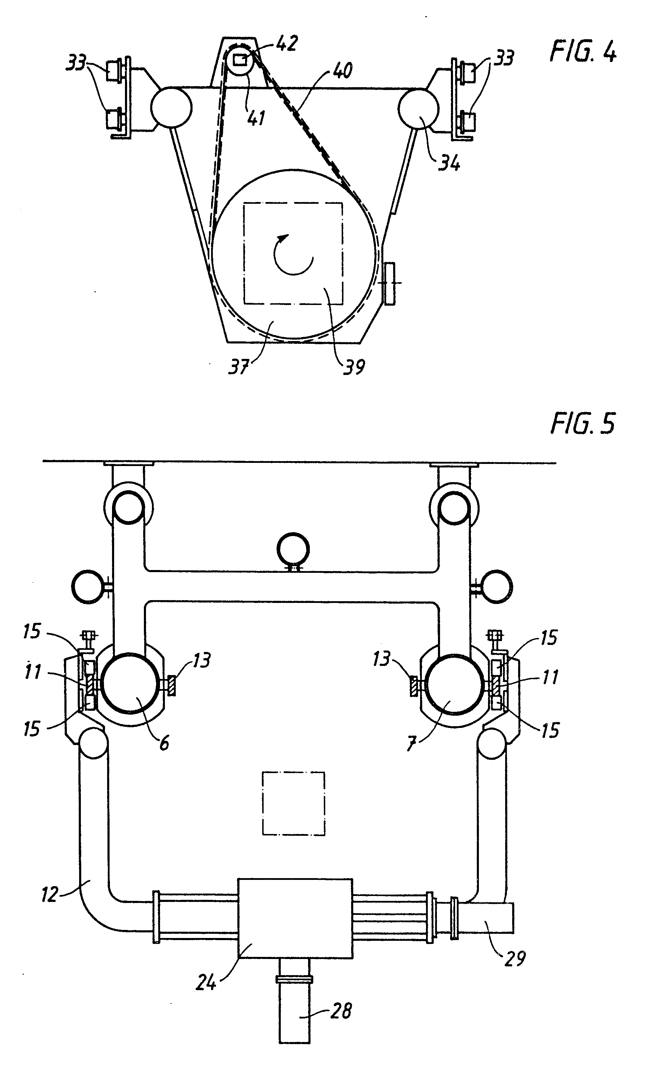

Figure 4 a horizontal section along the line C-C in Figure 3,

Figure 5 a horizontal section along the line A-A in Figure 1,

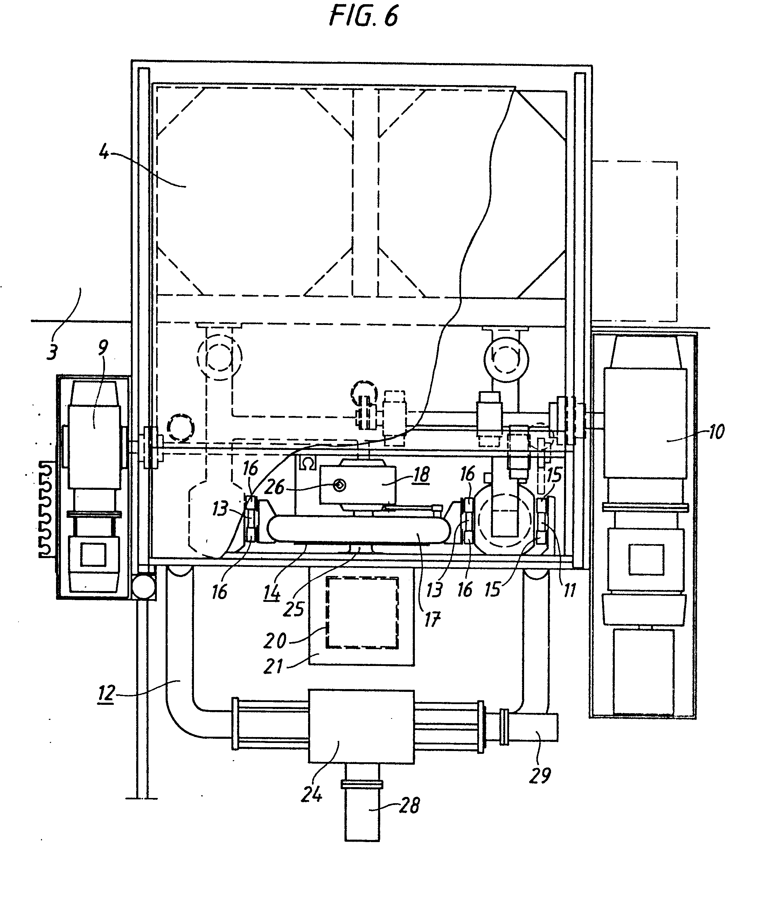

Figure 6 a view from above as indicated by the arrow B in
Figure 1A.


In the drawings 1 designates a service pool having a water
depth of at least 9 metres. A mobile repair and inspection
device 2 is suspended from the pool edge and supported
against a vertical pool wall 3. At its top the device 2 is
provided with a working platform 4 surrounded by a railing
5. An elongated, vertical framework structure or scaffold
includes two vertical guide tubes 6 and 7, which are mechanically connected to the working platform 4 via a supporting
plate 8 carrying two electric motors 9 and 10. The two guide
tubes 6 and 7 are each provided with a vertically extending
rail 11 welded thereto, the two rails together constituting
a guideway for a coordinate table car 12. In addition, the
guide tubes 6 and 7 are each provided with a vertically extending rail 13, which are welded to the guide tubes and
which together form a guideway for a repair car 14. A plurality of rollers 15 rotatably journalled on the coordinate
table car 12 are arranged to roll on the rails 11. A plurality of rollers 16 rotatably journalled on the repair car 14
are arranged to roll on the rails 13.


The repair car 14 includes an elongated vertical tube frame
17, a worm gearing 18 fixed to said tube frame, and an elongated container 19. The container 19 consists of an elongated tube 20 formed with tight walls and having a square
cross-section, and of two lids 21 and 22 each of which is
arranged at one respective end of the tube 20. The worm
gearing 18 has a gear housing which is fixed to the tube
frame 17, and a worm wheel whose shaft 25 - or an extension
thereof - is fixed on the outside of the tube 20 approximately in the centre thereof, the shaft 25 being directed
perpendicularly to the longitudinal axis of the tube 20.

A worm screw 26 included in the worm gearing 18 is vertically oriented and has an upwardly directed end portion, formed in such a way that it can be easily connected to a torsional tool, for example a box spanner, which can be lowered down from the working platform 4.

When work operations are to be carried out on the lower end surface of a fuel assembly, the container 19 is adjusted in the angular position shown in the drawings by rotating the worm screw 26. Thereafter the lid 21 is removed, and then the fuel assembly is inserted into the tube 20, whereafter the lid 21 is replaced on the tube. After that, the whole container 19 is rotated for 180$^{\circ}$ about the horizontal axis of the worm wheel by means of the worm screw 26, whereupon the lid 22 is removed. After that, the coordinate table car 12 is moved to a suitable vertical position by means of the drive motor 9 which, by way of a gear wheel and a hoist chain 27, is arranged in mechanical driving connection with the car 12. The car 12 supports the coordinate table 24 which can be moved to a desired position in a hoizontal plane by means of drive screws driven by the motors 28 and 29. The coordinate table 24 supports a holder for various tools, for example gripping tools for fuel rods. When the above-mentioned work operation is completed, the container is rotated back to its original position, whereafter the lid 21 is detached and the fuel assembly removed from the tube.

The lids 21 and 22 are fixed to the tube 20 by means of rotatable locking means which can be operated from the working platform. These locking means must be designed so as to be able to withstand, with great reliability, axial forced caused by the fuel assembly inserted into the container 19.

As mentioned above, the arrangement shown can be used for leak detection by means of the elevate sipping method. This requires that the tube 20 included in the container 19 is gas-tightly sealed at its upper end, and therefore one of the two lids 21 and 22 is replaced by a specially designed hood intended for gas occlusion. Therefore, at least one of the two end portions of the tube 20 is provided with special projections, lugs or the like, which are able to absorb axial tensile forced originating from a stretching device, by means of which a gas-tight hood can be pressed against an end portion of the tube 20, for example in such a way that an elastic sealing ring is compressed.

The repair car 14 is suspended from one end of a hoist chain 31, which is in engagement with a gear wheel driven by the motor 10, a counterweight being arranged at the other end of the chain. Also the hoist chain 27 is provided with a counterweight at one end.

If desired, the repair car 14 can be easily replaced by an inspection car 32, provided with a plurality of rollers 22 designed to roll on the rails 13. The rollers 33 are journalled on a tube frame 34 having substantially the same shape as the tube frame 17 mentioned above. A lower horizontal plate 35 and an upper horizontal plate 36, respectively, are welded to the ends of the tube frame 34. The plates 35 and 36 are each provided with a rotatably arranged, circular disc 37 and 38, respectively. These discs are provided with holders welded thereon, each of which is intended to be placed in a respective corner of a fuel assembly 39 standing on the disc 37. The disc 37 is provided with a gear rim or a gear wheel, being connected by a chain 40 to a gear wheel 41. This gear wheel 41 is provided with a central rectangular pin 42 which can be rotated by means of a tool, for example a box spanner, operated from the working platform.

If the fuel assembly 39 has become distorted in such a way that one or more of its side walls is/are not located in a

November 9, 1935
21 666 PE

0183127

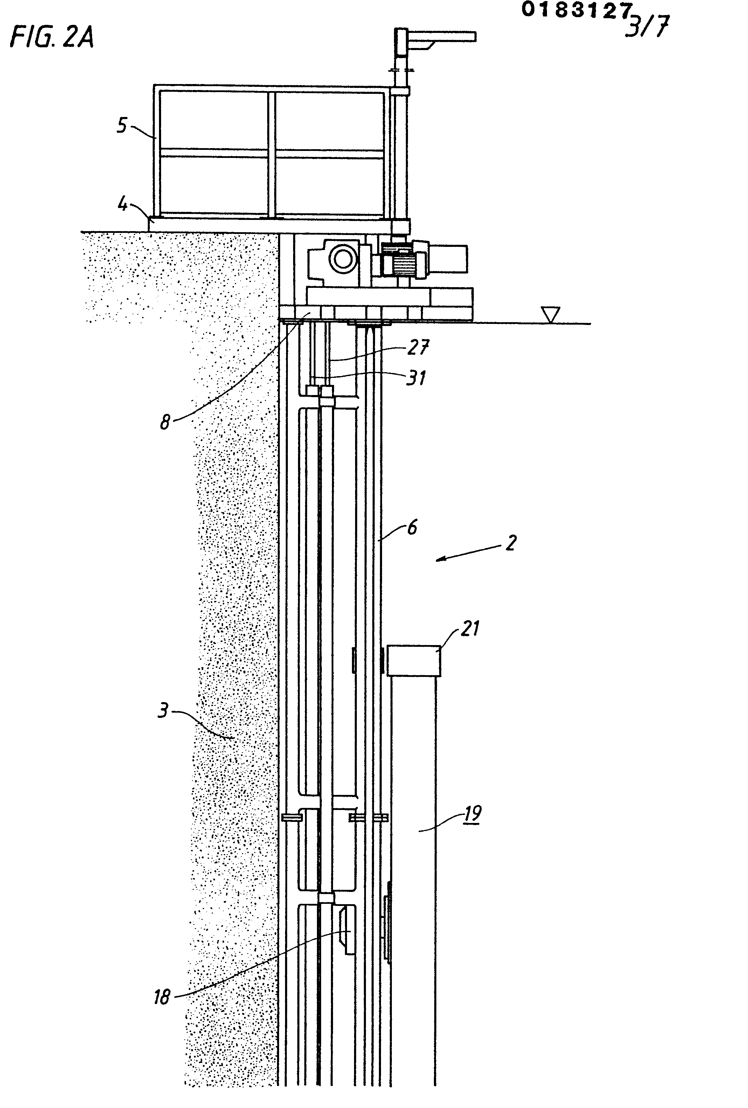

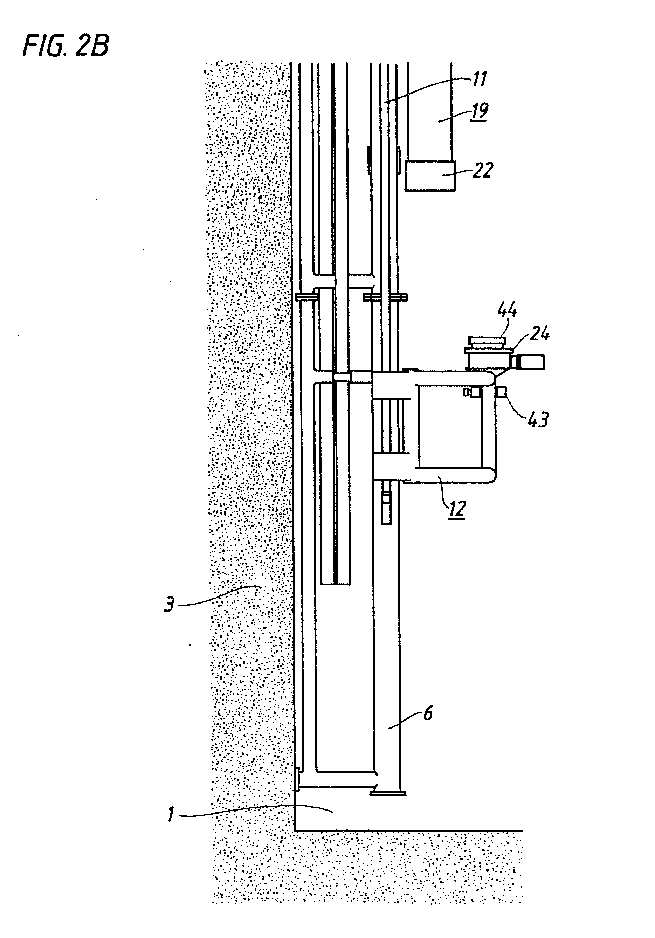

plane, the bent-out portion can be pressed inwards by means of a hydraulic cylinder 43 (Figure 2B) which is arranged on the coordinate table car 12 and is provided with a horizontally directed piston rod. A tool holder 44 with a plurality of threaded vertical holes for tool fixture is attached to the coordinate table 24.

CLAIMS

1. Repair and inspection arrangement for fuel assemblies belonging to a pressurized water reactor, with a vertical scaffold, arranged in a service pool (1), with a first and a second vertical guideway (13,11), with a first car (14) arranged on said first guideway (13), with a second car (12) arranged on said second guideway (11), with a first drive means (10) connected to said first car (14), and with a second drive means (9) connected to said second car (12), said first car (14) being provided with a fixing device for a vertically arranged fuel assembly, and said second car (12) being provided with a coordinate table (24), by means of which a holder for tools and/or inspection means can be adjusted for operation in a desired fuel rod position of a fuel assembly supported by said fixing device, c h a r a c- t e r i z e d in that said fixing device comprises an elongated container (19) with a fixable and removable lid (21,22) at either end, said container (19) being formed to enclose said fuel assembly, that said container (19) is fixed at its mid-portion to a horizontal shaft (25) which is rotatably journalled on said first car (14) with a range of rotation of at least 180$^{\circ}$, and that said shaft (25) is connected to an operating member (26) which is operable from above.

2. A repair and inspection arrangement according to claim 1, c h a r a c t e r i z e d in that said shaft (25) is connected to the shaft of a worm wheel which is part of a worm gearing (18) having a vertically directed worm screw (26) accessible from above, and being mounted on said first car (14).

FIG. 1A

FIG.1B

FIG. 2A

FIG. 2B

*FIG. 3*

FIG. 4

FIG. 5

FIG. 6

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| A | POST-IRRADIATION EXAMINATION, PROCEEDINGS OF THE CONFERENCE HELD IN GRANGE-OVER-SANDS, 13th-16th May 1980, pages 55-59, British Nuclear Energy Society, London, GB; K.P. FRANCKE et al.: "Eddy-current testing as a tool for post-irradiation examination" * Page 55, right-hand column, paragraph 3: "Description of the equipment"; figure 1 * | 1 | G 21 C 17/06 |
| A | POST-IRRADIATION EXAMINATION, PROCEEDINGS OF THE CONFERENCE HELD IN GRANGE-OVER-SANDS, 13th-16th May 1980, pages 173-179, British Nuclear Energy Society, London, GB; L.V. CORSETTI et al.: "The combustion engineering comprehensive fuel inspection stand" * Page 173, paragraph 3; figure 1 * | 1 | |
| A | FR-A-2 304 149 (FRAMATOME) * Page 2, line 37 - page 4, line 10; figure 1 * | 1 | |
| A | FR-A-2 298 859 (FRAMATOME) | | |

TECHNICAL FIELDS SEARCHED (Int Cl 4)

G 21 C 17/00
G 21 C 3/00

The present search report has been drawn up for all claims

| Place of search | Date of completion of the search | Examiner |
|---|---|---|
| THE HAGUE | 24-02-1986 | ERRANI C. |